# EUROPÄISCHE PATENTSCHRIFT

(11) **EP 2 379 916 B1**
(45) Veröffentlichungstag und Bekanntmachung des Hinweises auf die Patenterteilung: **10.04.2013**
(21) Anmeldenummer: 09774823.0
(22) Anmeldetag: 16.11.2009
(51) Int. Cl.: F16H 63/32

(54) **SCHALTGABEL**
SHIFT FORK
FOURCHETTE DE BOITE DE VITESSES

(30) Priorität: 22.12.2008 DE 102008064221
(43) Veröffentlichungstag der Anmeldung: 26.10.2011
(73) Patentinhaber: Koki Technik Transmission Systems GmbH, 09399 Niederwürschnitz (DE)
(72) Erfinder: SCHULZE, Bernd, 09366 Niederdorf (DE); MULITZE, Wofram, 61440 Oberursel (DE)
(74) Vertreter: Arat, Dogan
(86) Internationale Anmeldenummer: PCT/EP2009/008144
(87) Internationale Veröffentlichungsnummer: WO 2010/072287

(56) Entgegenhaltungen:
- DE-A1- 10 126 437
- DE-A1- 19 601 623
- DE-A1-102005 035 529
- DE-A1-102005 051 378
- JP-A- 2003 083 448

## Beschreibung

Die Erfindung betrifft eine Schaltgabel für das axiale Verschieben einer Schaltmuffe in einem Getriebe, mit zwei sich gegenüberliegenden, über einen Gabelriegelabschnitt miteinander verbundenen Gabelschenkelabschnitten.

### STAND DER TECHNIK

Aus dem Stand der Technik sind vielfältige Ausführungsformen von Schaltgabeln bekannt und auf dem Markt erhältlich, die hauptsächlich in Schaltgetrieben, häufig von Fahrzeugen, zum axialen Bewegungen von Schaltmuffen oder dergleichen verwendet werden.

In diesem Zusammenhang wir auf die gattungsgemäβe DE 196 01 623 A1 hingewiesen. Es offenbart eine Schaltgabel für das axiale Verschieben einer Schaltmuffe in einem Getriebe mit zwei sich gegenüberliegenden Gabelschenkelabschnitte, welche über einen Gabelriegelabschnitt verbunden sind.

Derartige Schaltgabeln werden meist aus Blechelementen, Blechstreifen, Schienenelementen oder Stangen hergestellt.

Eine derartige Schaltgabel ist beispielsweise aus der DE 101 58 729 A1 bekannt, die zum axialen Verschieben einer um eine Achse rotierenden Schaltmuffe in einem Schaltgetriebe vorgesehen ist, wobei dazu die Schaltgabel zwei aneinander gegenüberliegende Gabelschenkelabschnitte aufweist, die über einen Gabelriegelabschnitt verbunden sind, wobei der Gabelriegelabschnitt die Schaltgabel mit einer Schaltstange verbindet. Diese Schaltgabel ist im Wesentlichen aus einem flächigen Blech ausgebildet. Zur Gewichtseinsparung werden neuerdings bei derartigen Schaltgabeln Ausnehmungen in möglichen Bereichen der Schaltgabel, insbesondere in den Gabelschenkelabschnitten, vorgesehen. Diese nachträgliche Bearbeitung der Schaltgabel steigert nicht nur deren Kosten, da entsprechende Vorrichtungen und Personal zum Ausstanzen der entsprechenden Ausnehmungen vorgesehen werden müssen, sondern ist auch nicht besonders umweltfreundlich. Denn bei der Herstellung dieser Schaltgabeln fällt Abfall in Form von Ausstanzmaterial an, und ein entsprechender Aufwand an Energie zum Ausstanzen der Ausnehmungen muss bereitgestellt werden.

### AUFGABE

Eine Aufgabe der Erfindung ist, eine Schaltgabel vorzusehen, die ein besonders leichtes Gewicht hat und dennoch günstig und umweltverträglich herzustellen ist.

### LÖSUNG DER AUFGABE

Die Aufgabe der Erfindung wird dadurch gelöst, dass die Gabelschenkelabschnitte und der Gabelriegelabschnitt aus einem Draht oder Stab geformt sind.

Dies hat den Vorteil, dass die Schaltgabel besonders einfach und auch mit einem besonders geringen Gewicht hergestellt werden kann. Da keine nachträglichen Bearbeitungsvorgänge, insbesondere zum Ausstanzen von beispielsweise Gewichtsreduktionsöffnungen, vorgenommen werden müssen, können die damit verbundenen, schädigenden Umwelteinflüsse, wie Abfall und Energieverbrennung vermieden werden. Denn entsprechende Herstellungsschritte wie Ausstanzen sind bei der erfindungsgemässen Schaltgabel nicht notwendig, wodurch auch weniger Abfallmengen auftreten.

Ferner hat diese besonders leichte Schaltgabel den Vorteil, dass Fahrzeuge, in denen diese Schaltgabel verwendet wird, weniger Energie durch die besonders leichte Ausgestaltung der erfindungsgemässen Schaltgabel verbrauchen bzw, die entsprechende Gewichtsreduzierung durch die Schaltgabel vorteilhaft anderswo benutzt werden kann. Daher können auch Fahrzeuge mit der erfindungsgemässen Schaltgabel umweltfreundlicher betrieben werden.

Ferner ermöglicht die Verwendung einer Stabstruktur eine Schaltgabel bereitzustellen, die im Vergleich zu Schaltgabeln aus Blechmaterial besonders leicht ist.

Die Stabstruktur kann aus einem Stabelement gebildet sein, das mehrfach gekrümmt ist, sodass die Schaltgabel ausgebildet wird. Dieses Stabelement kann einzeln oder mehrteilig vorliegen. Das Stabelement hat den Vorteil, dass es im Vergleich zu Blechen ein geringeres Gewicht aufweist und zusätzlich ausser entsprechender Biegevorgänge kaum eine weitere Bearbeitung erfordert.

Vorteilhafterweise ist dem ersten Stabelement ein zweites Stabelement zugeordnet, wobei die beiden Stabelemente in einem Gabelriegelabschnitt der Schaltgabel derart zueinander beabstandet sind, dass eine Durchgangsöffnung ausgebildet ist. Diese Anordnung der Stabelemente zueinander hat den Vorteil, dass die Stabstruktur eine gewissen Aussteifung erfährt, sodass die Schaltgabel ihre Funktion einer Verschiebung rotierender Schaltmuffen erfüllen kann.

Die verwendeten Stabelemente können für sich allein aber auch nur gemeinsam die notwenige Steifigkeit aufweisen. Wesentlich hierbei ist nur, dass die Stabelemente die erforderlichen Biegefestigkeiten aufweisen und Sicherheitsbestimmungen erfüllen. Durch die vorteilhafte Ausgestaltung und Anordnung der Stabelemente zueinander, sodass eine etwa wabenförmige Durchgangsöffnung ausgebildet wird, wird jedoch die erforderliche Steifigkeit zum Verschieben der Schaltmuffen erreicht.

Vorteilhafterweise sind die Stabelemente im Gabelschenkelabschnitt fest aneinander angeordnet, sodass die Durchgangsöffnung geschlossen ist. Dadurch wird erreicht, dass das eine Stabelement sich gegenüber dem anderen Stabelement abstützen kann, was wiederum vorteilhaft für die Biegefestigkeit der Schaltgabel in diesem Bereich ist. Die Stabelemente können jedoch auch in diesem Bereich anders angeordnet sein; beispielsweise beabstandet zueinander, sodass die Durchgangsöffnung nicht geschlossen ist, wobei, falls notwenig, entsprechende Querstreben zur Aussteifung vorgesehen sein können. Diese Querstreben können auch in der Durchgangsöffnung vorgesehen sein, die am Gabelriegelabschnitt ausgebildet ist.

In einer bevorzugten Ausführungsform wird die Stabstruktur von einem einzigen Drahtstück ausgebildet. Das heisst, die Schaltgabel wird von nur einem Drahtstück ausgebildet, das entsprechend der Form der Schaltgabel gebogen ist, sodass die Schaltgabel im Wesentlichen einen Halbkreis umspannt.

In einer vorteilhaften Ausgestaltung der Schaltgabel ist der Übergang vom Gabelriegelabschnitt zum Gabelschenkelabschnitt wenigstens einfach gekrümmt. Es ist jedoch auch möglich, dass der Übergang mehrfach gekrümmt ist, sodass im Übergang zwischen Gabelriegel und Gabelschenkel ein wesentlich geradlinig verlaufendes Stabelement zwischen den einzelnen Krümmungen vorhanden ist.

Vorteilhafterweise sind die Gabelschenkelendabschnitte zum Verbessern des Ineingriffbringens und Aussereingriffbringens der Schaltgabel mit den entsprechenden Schaltmuffen mit begünstigenden Einrichtungen, wie beispielsweise einem Gleitschuh, versehen. Es ist jedoch auch möglich, die Gabelschenkelendabschnitte derart auszubilden, dass der Gabelschenkelendabschnitt gekrümmt ist, sodass eine Gleitöse ausgebildet ist, die dieselbe Funktion der Gleitschuhe übernimmt. Die Gleitöse kann auch mit reibungsreduzierenden Materialien und/oder auch mit einem Gleitschuh versehen sein. Wesentlich ist hierbei nur, dass die Gestalt des Gabelschenkelendabschnitts ein Ineingriffbringen und ein Aussereingriffbringen der Schaltgabel mit den entsprechenden Schaltmuffen nicht behindert, sondern unterstützt.

Vorteilhafterweise ist die Gleitöse weg von einer Innenseite der Schaltgabel gekrümmt, sodass der Innenseitenbereich von Vorsprüngen freigehalten ist. Es ist jedoch auch möglich, die Gleitöse in jeder beliebigen Richtung zu krümmen. Wesentlich ist hierbei nur, dass die Gleitöse die Funktion der Schaltgabel nicht einschränkt.

In einer bevorzugten Ausführungsform sind die Stabelemente der Stabstruktur der Schaltgabel aus Drahtstücken ausgebildet, die einen im Wesentlichen kreisförmigen Querschnitt aufweisen. Der Querschnitt der Stabelemente bzw. der Drahtstücke kann jedoch auch quadratisch, sechseckig oder jede andere polygonale oder kreisartige Querschnittsform aufweisen. Wesentlich ist hierbei nur, dass der Querschnitt dem Stabelement die entsprechende Biegefestigkeit zum Durchführen der Schaltschiebebewegungen der Schaltgabel bereitstellt, insbesondere im Gabelschenkelabschnitt.

Vorteilhafterweise ist die Schaltgabel mit einer Schaltstange fest verbunden. Die Verbindung wird bevorzugt über eine Schweissverbindung ausgebildet. Es ist jedoch auch möglich, die Schaltgabel in Ausnehmungen in der Schaltstange unterzubringen und diese über jede geeignete Verbindungstechnik ausreichend starr miteinander zu verbinden, wie beispielsweise Schweissen, Kleben und sonstige unlösbarer Verbindungsarten und/oder sonstige lösbaren Verbindungsarten, wie beispielsweise Schraubverbindungen.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine Vorderansicht einer erfindungsgemässen Schaltgabel, die auf einer Schaltstange angeordnet ist, wobei auf der jeweiligen Seite einer Symmetriehälfte unterschiedliche Ausführungsbeispiele der erfindungsgemässen Schaltgabel dargestellt sind;
**Figur 2** eine Draufsicht der Ausführungsbeispiele der Schaltgabel gemäss der Ansichtsverlauflinie A-B aus Figur 1;
**Figur 3** eine Seitenansicht eines ersten Ausführungsbeispiels der erfindungsgemässen Schaltgabel gemäss der Ansichtsverlauflinie E-F aus Figur 1;
**Figur 4** eine Seitenansicht eines zweiten Ausführungsbeispiels der Schaltgabel gemäss derAnsichtsverlauflinie D-C aus Figur 1;
**Figur 4a** eine alternative Ausführungsform eines Gabelschenkelendabschnittes der erfindungsgemässen Schaltgabel, und
**Figur. 5** mögliche Querschnittsformen eines Stabelements der efindungsgemässen Schaltgabel gemäss Schnittlinie V-V aus Figur 2.

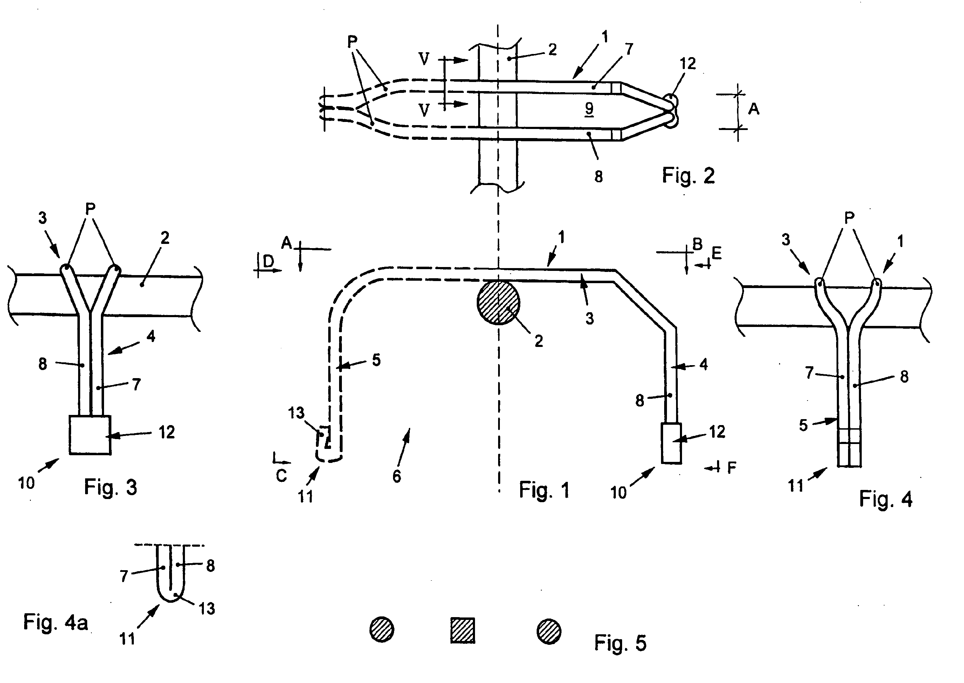

Wie aus Figur 1 ersichtlich, ist eine erfindungsgemässe Schaltgabel 1 dargestellt, die fest vorzugsweise durch Schweissen an einer Schaltstange 2 angebracht ist. Die Verbindung zwischen Schaltgabel 1 und Schaltstange 2 kann jedoch auch über Kleben oder sonstige nichtlösbare und lösbare Verbindungen ausgebildet sein.

In den Figuren 1 und 2 ist jeweils eine strichpunktierte Symmetrieachse angegeben. Auf der jeweiligen Seite der Symmetrieachse ist jeweils ein Ausführungsbeispiel der erfindungsgemässen Schaltgabel, einmal in gestrichelten Linien und einmal in durchzogenen Linien, dargestellt. Das heisst, die einzelnen Ausführungsbeispiele können jeweils spiegelsymmetrisch ausgeführt werden. Es ist jedoch auch vorstellbar, dass die Schaltgabel ähnlich gestaltet ist, wie in Figur 1 und 2 dargestellt, das heisst unsymmetrisch.

Die Schaltgabel 1, die auf der rechten Seite der Symmetrieachse dargestellt ist (mit durchgezogenen Linien), weist einen mehrfach gekrümmten Gabelriegelabschnitt 3 auf. An den Gabelriegelabschnitt 3 schliesst sich ein Gabelschenkelabschnitt 4 an. Der Gabelschenkelabschnitt 4 ist an seinem Gabelschenkelendabschnitt 10 mit einem Gleitschuh 12 versehen, der das Eingreifen in nicht dargestellte Schaltmuffen begünstigt.

Wie ferner aus Figur 1 und 2 ersichtlich, besteht die Schaltgabel 1 aus Draht oder Stabelementen 7, 8, die im Gabelriegelabschnitt 3 voneinander beabstandet sind. Die Stabelemente 7 und 8 umschliessen in der Draufsicht, wie in Figur 2 dargestellt, eine im Wesentlichen wabenförmige Durchgangsöffnung 9. Die Stabelemente 7, 8, verlaufen über einen gewissen Abstand im Wesentlichen parallel zueinander und nähern sich bis hin zum Gabelschenkelabschnitt 4 aneinander an, bis sie schliesslich derart aneinander angrenzen, dass die Durchgangsöffnung 9 geschlossen ist. D. h., die Stabelemente 7, 8 liegen dort möglichst bündig aneinander. Vorzugsweise sind die Stabelemente 7,8 im Gabelschenkelabschnitt 4 über eine Schweissnaht miteinander verbunden. Es ist jedoch auch möglich, die Stabelemente 7, 8 über Klebe- oder Pressverbindungen oder sonstige geeignete Verbindungsmöglichkeiten fest miteinander zu verbinden.

In Figur 3 ist in einer Seitenansicht gemäss Ansichtsverlauflinie E-F der Übergang vom Gabelriegelabschnitt 3 hin zum Gabelschenkelabschnitt 4 dargestellt, wobei zusätzlich auch der Gabelschenkelendabschnitt 10 des ersten Ausführungsbeispiels der erfindungsgemässen Schaltgabel 1 dargestellt ist. Der Gabelschenkelendabschnitt 10 ist dabei mit einem Gleitschuh 12 versehen. Idealerweise ist der Gleitschuh 12 aus einem Kunststoff hergestellt, der einen reibungslosen Eingriff der Gabelschenkelendabschnitte 10 in die jeweilige Schaltmuffe begünstigt.

Die Gabelschenkelendabschnitte der Stabelemente 7, 8, können jedoch auch gemäss dem in Figur 4 und 4a dargestellten alternativen Ausführungsbeispiel ausgebildet sein. Dabei ist der Gabelschenkelendabschnitt 11 derart gekrümmt, dass eine im Wesentlichen u-förmige Gleitöse ausgebildet wird, wie aus Figuren 1 ersichtlich. Auch die Gleitöse 13 hat die Aufgabe, den Eingriff der erfindungsgemässen Schaltgabel 1 in die jeweilige Schaltmuffe zu verbessern bzw. zu begünstigen.

In Figur 4a ist ein alternatives Ausführungsbeispiel des Gabelschenkelendabschnitts 11 dargestellt. Diese Gestaltung des Gabetschenkelendabschnitts 11 wird dann bevorzugt, wenn das Stabelement 7 und das Stabelement 8 aus einem einzigen Drahtstück bestehen, d. h. die Schaltgabel 1 kann entweder aus zwei separaten Drahtstücken ausgebildet sein, wie mit den Stabelementen 7 und 8 angedeutet oder die Schaltgabel 1 besteht aus einem einzigen, durchgängigen Drahtstück, wobei in diesem Fall die Stossstelle derselben im Bereich einer Schaltstange 2 liegt.

Wie aus Figur 4a ersichtlich, ist also im Falle, dass das Stabelement 7, 8 aus einem einzigen Drahtstück bestehen, der Gabelschenkelendabschnitt 11 im Wesentlichen schlaufenförmig ausgebildet.

Wie bereits oben angesprochen, wird die Schaltgabel bevorzugt aus mindestens einem Drahtstück hergestellt. In Figur 5 sind mögliche Querschnittsformen des Drahtstückes bzw. der Stabelemente 7, 8 dargestellt. Die möglichen Querschnittsformen können von kreisförmig, quadratisch bis mehreckig reichen, wobei jede Drahtquerschnittsform vorstellbar ist, die eine ausreichende Biegefestigkeit und entsprechende Verarbeitungsmöglichkeit bereitstellt.

### Bezugszeichenliste

| | | | | | |
|---|---|---|---|---|---|
| 1 | Schaltgabel | 34 | | 67 | |
| 2 | Schaltstange | 35 | | 68 | |
| 3 | Gabelrieqelabschnitt | 36 | | 69 | |
| 4 | Gabelschenkelabschnitt | 37 | | 70 | |
| 5 | Gabelschenkeiabschnitt | 38 | | 71 | |
| 6 | Innenseite | 39 | | 72 | |
| 7 | Stabelement | 40 | | 73 | |
| 8 | Stabelement | 41 | | 74 | |
| 9 | Durchgangsöffnung | 42 | | 75 | |
| 10 | Gabelschenkelendabschnitt | 43 | | 76 | |
| 11 | Gabelschenkelendabschnitt | 44 | | 77 | |
| 12 | Gleitschuh | 45 | | 78 | |
| 13 | Gleitöse | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | A | Abstand |
| 21 | | 54 | | P | Stabstruktur |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Schaltgabel (1) für das axiale Verschieben einer Schaltmuffe in einem Getriebe, mit zwei sich gegenüberliegenden, über einen Gabelriegelabschnitt (3) miteinander verbundenen Gabelschenketabschnitten (4, 5),
**dadurch gekennzeichnet,**
**dass** die Gabelschenkelabschnitte (4, 5) und der Gabelriegelabschnitt (3) aus einem Draht oder stabelement (7, 8) geformt sind.

2. Schaltgabel nach Anspruch 1, **dadurch gekennzeichnet, dass** das Stabelement (7, 8) mehrfach gekrümmt ist.

3. Schaltgabel nach Ansprüche. 1 oder 2, **dadurch gekennzeichnet dass** zumindest zwei Stabelemente (7, 8) zu der Schaltgabel zusammengesetzt sind.

4. Schaltgabel nach Anspruch 3, **dadurch gekennzeichnet, dass** im Gabelriegelabschnitt (3) dem ersten Stabelemente (7) das zweite Stabelement (8) mit einem Abstand (A) zugeordnet ist, so dass eine Durchgangsöffnung (9) ausgebildet ist.

5. Schaltgabel nach Anspruch 3 oder 4, **dadurch gekennzeichnet, dass** im Gabelschenkelabschnitt (4, 5) das erste Stabelement (7) und das zweite Stabelement (8) aneinander angeordnet sind,

6. Schaltgabel nach Anspruch 3 oder 4, **dadurch gekennzeichnet, dass** im
Gabelschenkelabschnitt (4, 5) das erste Stabelement (7) und das zweite Stabelement (8) zueinander beabstandet sind.

7. Schaltgabel nach wenigstens einem der Ansprüche 3 bis 6, **dadurch gekennzeichnet, dass** das erste und das zweite Stabelement (7, 8) von einem einzigen Drahtstück ausgebildet sind und ein stofflich einstückiges Bauteil bilden.

8. Schattgabel nach wenigstens einem der Ansprüche 3 bis 6, **dadurch gekennzeichnet, dass** das erste und das zweite Stabelement (7, 8) von jeweils einem Drahtstück ausgebildet sind und jeweils zwei Bauteile sind.

9. Schaltgabel nach wenigstens einem der Ansprüche 1 bis 8, **dadurch gekennzeichnet, dass** an einem Gabelschenkelendabschnitt (10, 11) der Schaltgabel (1) ein Gleitschuh (12) vorgesehen ist.

10. Schaltgabel nach wenigstens einem der Ansprüche 1 bis 8, **dadurch gekennzeichnet, dass** das Stabelement (7, 8) in einem Gabelschenkelendabschnitt (10, 11) der Schaltgabel (1) eine Krümmung aufweist.

11. Schaltgabel nach einem der Ansprüche 9 oder 10, **dadurch gekennzeichnet, dass** der Gabelschenkelendabschnitt (10, 11) im Wesentlichen U-förmig gekrümmt ist.

12. Schaltgabel nach Anspruch 11, **dadurch gekennzeichnet, dass** der gekrümmt, Gabelschenkelendabschnitt (10, 11) eine Gleitöse (13) bildet

13. Schaltgabel nach Anspruch 12, **dadurch gekennzeichnet, dass** die Gleitöse (13) gekrümmt ist.

14. Schaltgabel nach wenigstens einem der Ansprüche 10 bis 13, **dadurch gekennzeichnet, dass** der gekrümmte Gabelschenkelendabschnitt (10, 11) mit einem Gleitschuh (12) versehen ist.

15. Schaltgabel nach wenigstens einem der Ansprüche 1 bis 14, **dadurch gekennzeichnet, dass** das Stabelement einen im Wesentlichen kreisförmigen oder polygonalen Querschnitt aufweist.

## Claims

1. Gear shift fork (1) for the axial shifting of a gear shift sleeve in a gearbox, comprising two fork arm sections (4, 5), which lie opposite to each other and which are connected to each other via a fork crosspiece section (3),
**characterised**
**in that** the fork arm sections (4, 5) and the fork crosspiece section (3) are formed from a wire or a bar element (7, 8).

2. Gear shift fork according to Claim 1, **characterised in that** the bar element (7, 8) is multiply bent.

3. Gear shift fork according to Claims 1 or 2, **characterised in that** at least two bar elements (7, 8) are assembled to form the gear shift fork.

4. Gear shift fork according to Claim 3, **characterised in that** in the fork crosspiece section (3) the first bar element (7) is associated with the second bar element (8) at a spacing (A) in such a manner that a passage opening (9) is formed.

5. Gear shift fork according to Claim 3 or 4, **characterised in that** in the fork arm section (4, 5) the first bar element (7) and the second bar element (8) are arranged against each other.

6. Gear shift fork according to Claim 3 or 4, **characterised in that** in the fork arm section (4, 5) the first bar element (7) and the second bar element (8) are spaced from each other.

7. Gear shift fork according to at least one of Claims 3 to 6, **characterised in that** the first and the second bar element (7, 8) are formed from a single piece of wire and constitute a materially one-piece structural element.

8. Gear shift fork according to at least one of Claims 3 to 6, **characterised in that** the first and the second bar element (7, 8) are formed from one piece of wire each and are in each case two structural elements.

9. Gear shift fork according to at least one of Claims 1 to 8, **characterised in that** at a fork arm end section (10, 11) of the gear shift fork (1) a sliding shoe (12) is provided.

10. Gear shift fork according to at least one of Claims 1 to 8, **characterised in that** the bar element (7, 8) in a fork arm end section (10, 11) of the gear shift fork (1) is bent.

11. Gear shift fork according to one of Claims 9 or 10, **characterised in that** the fork arm end section (10, 11) is bent substantially in a U-shape.

12. Gear shift fork according to Claim 11, **characterised in that** the bent fork arm end section (10, 11) forms a sliding eyelet (13).

13. Gear shift fork according to Claim 12, **characterised in that** the sliding eyelet (13) is bent.

14. Gear shift fork according to at least one of Claims 10 to 13, **characterised in that** the bent fork arm end section (10, 11) is provided with a sliding shoe (12).

15. Gear shift fork according to at least one of Claims 1 to 14, **characterised in that** the bar element has a substantially circular or polygonal cross section.

## Revendications

1. Fourche de boîte de vitesses (1) pour le déplacement axial d'un manchon coulissant dans un engrenage, avec deux segments de branche de fourche (4, 5) opposés reliés l'un à l'autre par l'intermédiaire d'un segment de traverse de fourche (3),
**caractérisée par le fait**
**que** les segments de branche de fourche (4, 5) et le segment de traverse de fourche (3) sont formés à partir d'un fil ou d'un élément de tige (7, 8).

2. Fourche de boîte de vitesses selon la revendication 1, **caractérisée par le fait que** l'élément de tige (7, 8) est courbée plusieurs fois.

3. Fourche de boîte de vitesses selon les revendications 1 ou 2, **caractérisée par le fait qu'**au moins deux éléments de tige (7, 8) sont assemblés pour former la fourche de boîte de vitesses.

4. Fourche de boîte de vitesses selon la revendication 3, **caractérisée par le fait que** dans le segment de traverse de fourche (3) le deuxième élément de tige (8) est associé à une distance (A) au premier élément de tige (7), de sorte que soit formée une ouverture de passage (9).

5. Fourche de boîte de vitesses selon la revendication 3 ou 4, **caractérisée par le fait que** dans le segment de branche de fourche (4, 5) le premier élément de tige (7) et le deuxième élément de tige (8) sont disposés l'un à côté de l'autre.

6. Fourche de boîte de vitesses selon la revendication 3 ou 4, **caractérisée par le fait que** dans le segment de branche de fourche (4, 5) le premier élément de tige (7) et le deuxième élément de tige (8) sont distants l'un de l'autre.

7. Fourche de boîte de vitesses selon au moins l'une des revendications 3 à 6, **caractérisée par le fait que** le premier et le deuxième élément de tige (7, 8) sont réalisés à partir d'un seul tronçon de fil et forment un composant matériellement d'une seule pièce.

8. Fourche de boîte de vitesses selon au moins l'une des revendications 3 à 6, **caractérisée par le fait que** le premier et le deuxième élément de tige (7, 8) sont réalisés, chacun, à partir d'un tronçon de fil et sont chaque fois deux composants.

9. Fourche de boîte de vitesses selon au moins l'une des revendications 1 à 8, **caractérisée par le fait que** sur un segment d'extrémité de branche de fourche (10, 11) de la fourche de boîte de vitesses (1) est prévu un patin (12).

10. Fourche de boîte de vitesses selon au moins l'une des revendications 1 à 8, **caractérisée par le fait que** l'élément de tige (7, 8) dans un segment d'extrémité de branche de fourche (10,11) de la fourche de boîte de vitesses (1) présente une courbure.

11. Fourche de boîte de vitesses selon l'une des revendications 9 ou 10, **caractérisée par le fait que** le segment d'extrémité de branche de fourche (10, 11) est courbé sensiblement en forme de □U□.

12. Fourche de boîte de vitesses selon la revendication 11, **caractérisée par le fait que** le segment d'extrémité de branche de fourche courbé (10, 11) forme un oeillet coulissant (13).

13. Fourche de boîte de vitesses selon la revendication 12, **caractérisée par le fait que** l'oeillet coulissant (13) est courbé.

14. Fourche de boîte de vitesses selon au moins l'une des revendications 10 à 13, **caractérisée par le fait que** le segment d'extrémité de branche de fourche courbé (10, 11) est pourvu d'un patin (12).

15. Fourche de boîte de vitesses selon au moins l'une des revendications 1 à 14, **caractérisée par le fait que** l'élément de tige présente une section sensiblement circulaire ou polygonale.
